# EUROPEAN PATENT SPECIFICATION

(11) **EP 4 473 616 B1**
(45) Date of publication and mention of the grant of the patent: **29.10.2025**
(21) Application number: 23717678.9
(22) Date of filing: 24.02.2023
(51) Int. Cl.: H01Q 1/28, H01Q 1/42

(54) **LOW-COST RADOME MATERIALS AND FABRICATION PROCESSES**
KOSTENGÜNSTIGE RADOMMATERIALIEN UND HERSTELLUNGSVERFAHREN
MATÉRIAUX DE RADÔME À FAIBLE COÛT ET PROCÉDÉS DE FABRICATION

(30) Priority: 24.02.2022 US 202263313725 P
(43) Date of publication of application: 11.12.2024
(73) Proprietor: ViaSat Inc., Carlsbad, CA 92009 (US)
(72) Inventor: VICTOR, Jared, Carlsbad, California 92009 (US); SCAMARDO, Michael, Carlsbad, California 92009 (US); RUNYON, Donald L., Carlsbad, California 92009 (US); BLICKENSTAFF, Emily, Carlsbad, California 92009 (US); GIMERSKY, Martin, Carlsbad, California 92009 (US); KLEFENZ, Frank, Carlsbad, California 92009 (US); MILLER, Gary, Carlsbad, California 92009 (US); FROST, Juddson C., Carlsbad, CA 92009 (US); COFFIN, James G., Carlsbad, CA 92009 (US); SPERA, April A., Carlsbad, CA 92009 (US); CARLSON, Joseph M., Carlsbad, CA 92009 (US)
(74) Representative: Appleyard Lees IP LLP
(86) International application number: PCT/US2023/013802
(87) International publication number: WO 2023/164121

(56) References cited:
- US-A1- 2019 381 760
- US-B2- 10 290 935
- US-B2- 9 099 782

## Description

### Background

Radiofrequency (RF) equipment is often protected from an external environment using what is commonly referred to as a radome. Derived from the portmanteau of radar and dome, radomes were initially used for protection of radar equipment, particularly in aviation applications. However, use of radomes now generally extends to any protected RF equipment, whether vehicle-based or land based.

Radomes have been constructed in a variety of shapes using a variety of materials. Traditional approaches to radome construction typically use an "A-sandwich" structure in which a core material is bound by "skin" layers at the boundary of the core material. This structure has traditionally been utilized to achieve sufficient structural integrity to withstand aerodynamic loading, potential ballistic strikes, and protection from weather and other environmental conditions.

Other approaches have utilized thermoset polymers. However, thermoset polymers involved complex and costly manufacturing techniques. In turn, continued improvement to radomes is desired to achieve suitable performance while providing manufacturing and cost efficiencies.

Prior art also includes US10290935B2 which describes a tri-band multiwell radome includes a dense polymeric strike plate that is configured on the outside of the radome, a capture layer and a tuning layer. The polymeric strike plate of US10290935B2 is a tough polymer, such as a polycarbonate and breaks a bullet into fragments that are more easily captured by the capture layer. The capture layer of US10290935B2 includes a number of fabric sheets of highly oriented fibers, such as polyethylene fibers, and a binder. The tuning layer may be a low density foam that is configured inside of the capture layer and provided to reduce reflective losses and improve ballistic performance. A tri-band radome cover may have a dB loss over a wavelength of 8 to 40 kHz of no more than 1 dB. A tri-band radome cover of US10290935B2 may be formed in a dome shape.

Prior art also includes US2019381760A1 which describes a radome that includes a laminated structure in the form of a stack of composite layers, each composite layer including a fibrous reinforcement mixed with an organic matrix. The composite layers includes at least one high-permittivity layer, including a structural layer, and a plurality of low-permittivity layers, including two covering layers sandwiching the structural layer between them, each of the covering layers having a lower thickness to the thickness of the structural layer. In each low-permittivity layer, the fibrous reinforcement includes a majority of polyolefin fibers.

Prior art also includes US9099782B2 which describes a lightweight multiband, high angle sandwich radome structure for millimeter wave frequencies includes a central core layer, a reinforced laminate skin adjacent each side of the central core, and outer matching layers on each of the reinforced laminates.

### Summary

According to an aspect of the present invention there is provided an a radome of Claim 1. Optional features of the radome are provided in Claims 2 to 8.

According to another aspect of the present disclosure, there is provided a method for producing a radome of Claim 9. Optional features of the method for producing a radome are provided in dependent Claims 10 to 13.

### Brief Description of the Drawings

FIG. 1 depicts an example of a radome provided on an aircraft.
FIG. 2 depicts an example radome structure in cross section taken along a mid-line of the radome in FIG. 1.
FIG. 3 illustrates a perspective view of an example broadband radome structure.
FIG. 4 illustrates an example of a narrowband radome structure that may include specifically provided portions for different functions of an antenna enclosed by the narrowband radome.
FIG. 5 illustrates an example of a radome structure.
FIG. 6 depicts another example of a radome structure.
FIG. 7 depicts still another example radome structure.
FIG. 8 illustrates an example of a radome structure in which a structural layer is configured to provide improved RF performance through multiple plies of the structural layer.
FIGS. 9A-9C illustrates examples of a thermoforming device in various processing steps for a thermoforming to form a thermoplastic sheet into a desired radome shape.

### Detailed Description

While the disclosure is susceptible to various modifications and alternative forms, specific examples thereof have been shown by way of example in the drawings and are herein described in detail. It should be understood, however, that it is not intended to limit the disclosure to the particular form disclosed, but rather, the invention is to cover all modifications, equivalents, and alternatives falling within the scope of the disclosure as defined by the claims.

As noted above, radomes have traditionally been utilized to provide protection to RF equipment. In this regard, a radome may provide an enclosure in which RF equipment is located while allowing RF energy to propagate through the radome efficiently and with as little distortion as possible. The radome may comprise a portion of a structure that supports and houses the RF equipment with the RF energy from the equipment generally passing through the radome.

As such, when designing radomes, a balance is desired between RF performance and structural performance. For example, in an idealized scenario a radome would be "invisible" to RF energy such that the RF energy would pass through the radome with losses and distortions no greater than propagation through free space. However, in reality, in order to achieve sufficient structural performance of the radome, the structural materials used to construct the radome may interfere with RF energy causing attenuation, reflections, guided waves in the radome, degradation of polarization purity, or other disturbances that compromise the RF performance of the RF equipment shielded by the radome (i.e., result in RF signal degradations of a number of kinds). Typically, the more structurally robust a material, the worse the RF performance of that material. As such, a balance between structural performance and RF performance is desirable with optimization of RF performance for a given structural performance.

As noted above, A-sandwich structures in which a typically lightweight core material is sandwiched between structural layers or thermoset polymers have been used for radome construction. These materials have provided sufficient structural integrity to traditional RF equipment whether vehicle-based or ground-based. RF equipment, most notably antennas, shielded by radomes have traditionally been relatively bulky, thus requiring radomes with deep draws or a significant height relative to the base footprint of the radome. Such shapes have traditionally required radome materials with significant structural integrity, especially in aviation-related contexts in which structural performance was of particularly pertinent (e.g., for protection from aerodynamic loading, bird strikes, or even ballistics in the case of military applications).

In turn, material costs and manufacturing costs tended to be high for such radomes, particularly those made from thermoset polymers. Use of thermoset polymers have required labor-intensive hand layup of pre-impregnated fibers in a mold. Such thermoset polymer radomes also required cutting of individual plies of pre-impregnated fibers for placement in the mold. This process may also include intermediate de-bulking and high pressure autoclave curing processes. Further still, such thermoset materials required particular handling requirements with little or no re-work ability once crosslinking was achieved in the thermoset polymer. Further still, thermoset polymers are subject to expiration if not used within a given window and may have cumbersome storage requirements such as cold (e.g., frozen) storage. As such, radomes using such thermoset polymers were expensive and time-consuming to manufacture.

In contrast, the present disclosure generally relates to use of thermoplastic materials for construction of a radome. Such an approach provides advantages in relation to reduced material costs, reduced manufacturing complexity, and improved RF performance. Namely, the structures described herein may include thermoplastic materials that may be supplied as laminated sheet stock material. Such sheet stock material may be provided in standardized sheet sizes (e.g., 4 foot (122 cm) by 12 foot (366 cm) sheets). As described in greater detail below, such sheet stock material may be provided at specified sheet thicknesses and reinforcement ply orientations. Moreover, radomes using the thermoplastic materials described herein may be manufactured using relatively quick and simple thermoforming techniques that avoid the labor- and cost-intensive approach of thermoset materials. In this regard, the material and manufacturing costs for radomes produced using such thermoplastic materials may be significantly reduced while achieving faster manufacturing with higher production rates.

In addition, approaches are described herein to improve RF performance of the thermoplastic materials used for radome construction. As will be described in greater detail below, it is presently recognized that the thermoplastic materials utilized for radome construction may be used in conjunction with one or more RF matching layers. The one or more RF matching layers may be integrated with any sheet stock material or may be added to a structural layer during a manufacturing process. In any regard, the RF matching layers may provide beneficial dielectric constant profiles of a given radome structure to improve RF performance of the radome while maintaining the structural integrity provided by the thermoplastic materials described herein.

Specifically, the RF matching layers described herein may be utilized to provide smaller discontinuities between the dielectric constants experienced by RF energy passing through the material of the radome with respect to the dielectric constant of free space. The dielectric constant of a material may affect the propagation of RF energy through the material. Materials with a high dielectric constant value may result in larger losses or impedance mismatches of the RF energy passing through the material. In contrast, materials with a low dielectric constant value may result in smaller losses or impedance mismatches of the RF energy passing through the material. The dielectric constant value of a given material may be based upon the composition of the material, or other properties of the material. The losses caused by, and the impedance mismatches of, a given material may be based upon the dielectric constant of the material, the thickness of the material, or other properties of the material itself as well as the materials adjacent to the material in question. As may be appreciated, the present disclosure may provide radome structures with relatively low dielectric constant through use of a fiber reinforced thermoplastic composite including a fiber reinforcement and a thermoplastic resin where the resin content is greater as a percent of weight of the composite than would traditionally be provided. That is, the thermoplastic resin may provide a lower dielectric constant than the fiber reinforcement. Accordingly, an effective dielectric constant of a structural layer of a radome may be reduced (and thus RF performance improved) by using a relatively high resin content relative to fiber content in a fiber reinforced composite structural layer. Thus, as a compromise to structural performance, a composite material with relatively high resin-to-fiber content may provide improved RF performance. For example, a resin content of the thermoplastic resin of the fiber reinforced thermoplastic composite is not fewer than 25 weight percent and not more than about 60 weight percent

The approach is described in the present disclosure may also utilize RF matching layers to provide improved RF performance. The RF matching layers may facilitate a more gradual change between the dielectric constant values of the materials through which RF energy propagates when passing through the radome. For instance, RF energy passing from air through a structural layer may experience signal loss as a result of the reflection of a portion of the RF energy upon encountering the discontinuity in dielectric constant at the boundary of the air and structural layer. With all other parameters being equal, the larger the differential in dielectric constant experienced by the RF energy at a material interface, the greater the signal loss. As such, for a given change in dielectric constant (Δ*DK*), RF energy passing through a single material boundary with a single change in dielectric constant of Δ*DK* results in a greater signal loss than the RF signal passing through two material boundaries each with a change in dielectric constant of, for example, 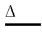 . As such, the RF matching layers as described herein may provide for smaller discrete differentials in a dielectric constant as the RF energy passes through material boundaries in the radome, thus providing enhanced RF performance.

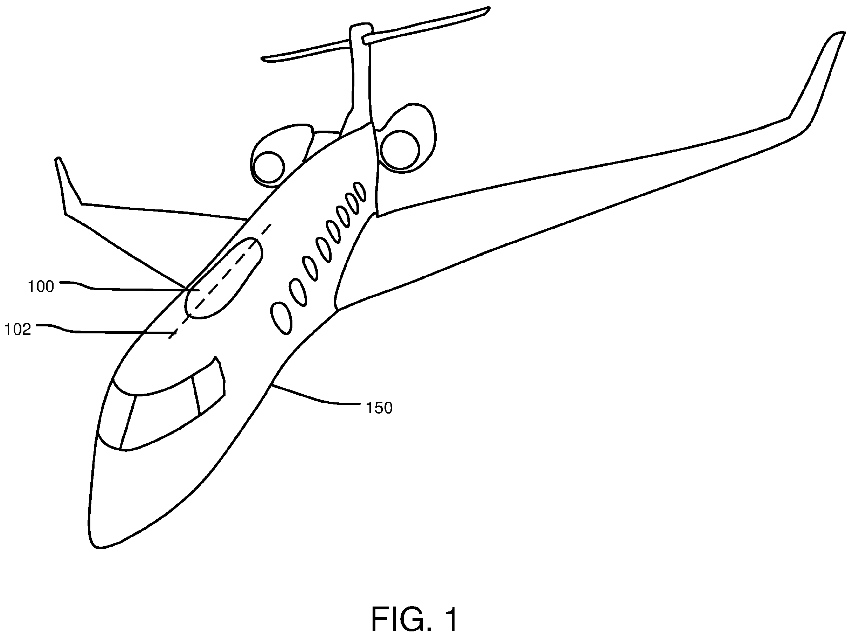

With reference to the figures, FIG. 1 illustrates one potential example in which a radome 100 is disposed on an aircraft 150. While the radome 100 depicted in FIG. 1 is shown on the aircraft 150, it may be appreciated that a radome 100 according to the present disclosure may additionally or alternatively be used in any other context such as ground vehicle applications, maritime applications, stationary land-based applications, or the like. As may be appreciated, some contexts may require reduced structural performance, which may allow for improved RF performance.

In any regard, the radome 100 may be used to enclose RF equipment on the aircraft 150 including, for example, one or more RF antennas that may be used for communication purposes. In one example, an antenna enclosed by the radome 100 may be used for communication (e.g., bidirectional communication) with a satellite to establish a data connection to the aircraft 150 using the antenna. The antenna may comprise a phased array antenna whose aperture may be aligned with the radome 100 to allow the beam of the antenna to pass through the radome 100.

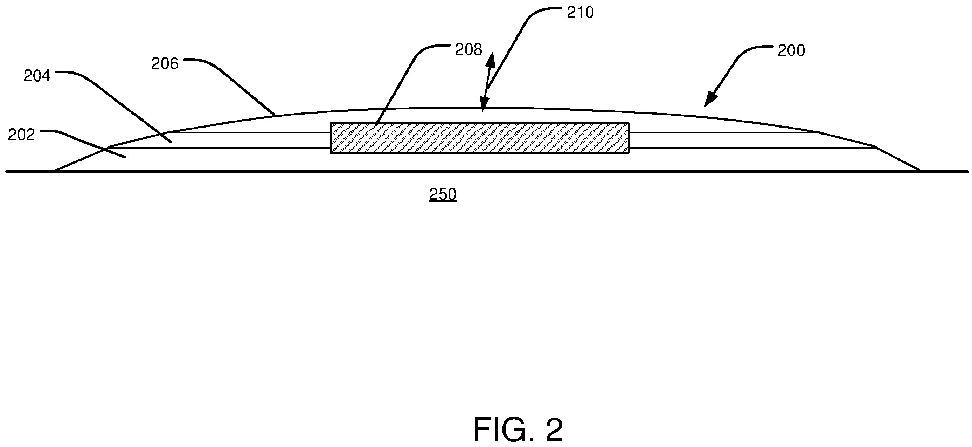

FIG. 2 depicts a radome structure 200 in cross section taken along a mid-line 102 of the radome 100 in FIG. 1. Reference may be made herein to an "inner" direction and an "outer" direction. Such reference is intended to refer to directions relative to the enclosed space protected by the radome structure 200. Specifically, an inner direction is towards the RF equipment enclosed by the radome structure 200. An outer direction is away from the RF equipment enclosed by the radome structure 200. Thus, an inner surface of the radome structure 200 may be that nearest the enclosed RF equipment while an outer surface may be that furthest from the RF equipment. As such, an outer surface may also be referenced as an airflow surface in the context of an aviation related radome structure 200.

The radome structure 200 may include a fairing 202 that is engaged with a platform 250 such as a fuselage of an aircraft. The fairing 202 may have attached thereto an adapter plate 204. The adapter plate 204 may be configured such that an antenna 208 is attachable to the adapter plate 204. A radome 206 may be attached to the adapter plate 204 such that the radome 206 extends relative to the antenna 208. In turn, the fairing 202, adapter plate 204, and/or radome 206 may enclose the antenna 208 in an enclosed volume. In turn, the antenna 208 in the enclosed volume may be protected from environmental conditions including precipitation, wind shear, debris, and the like. The antenna 208 may emit and/or receive RF energy 210 that passes through the radome 206.

As may be appreciated, with use of a phased array antenna, the antenna 208 may be relatively low profile in relation to a direction of the RF energy 210 transmission. As such, the antenna 208 may be at least partially disposed in a direction inward to an interface of the radome 206 and the adapter plate 204. Thus, the radome 206 may be manufactured with a shallower curvature, which may assist in the manufacturing process. In addition, the frontal cross-sectional area of the radome structure 200 may predominantly comprise the fairing 202 and the adapter plate 204 such that any potential contact (e.g., from an object in an aircraft slipstream such as a bird strike or the like) may likely contact the fairing 202 and/or adapter plate 204 rather than directly contacting the radome 206. This may reduce the requirement for structural performance of the radome 206, further allowing for enhanced RF performance.

While not shown in FIG. 2, the encapsulated space defined between the platform 250 and the fairing 202, adapter plate 204 and radome 206 may be filled with a fluid or other material (e.g., a dielectric material). In other examples, the encapsulated space defined between the platform 250 and the fairing 202, adapter plate 204 and radome 206 may be provided at a vacuum (e.g., a lower pressure than ambient pressure outside the enclosed space).

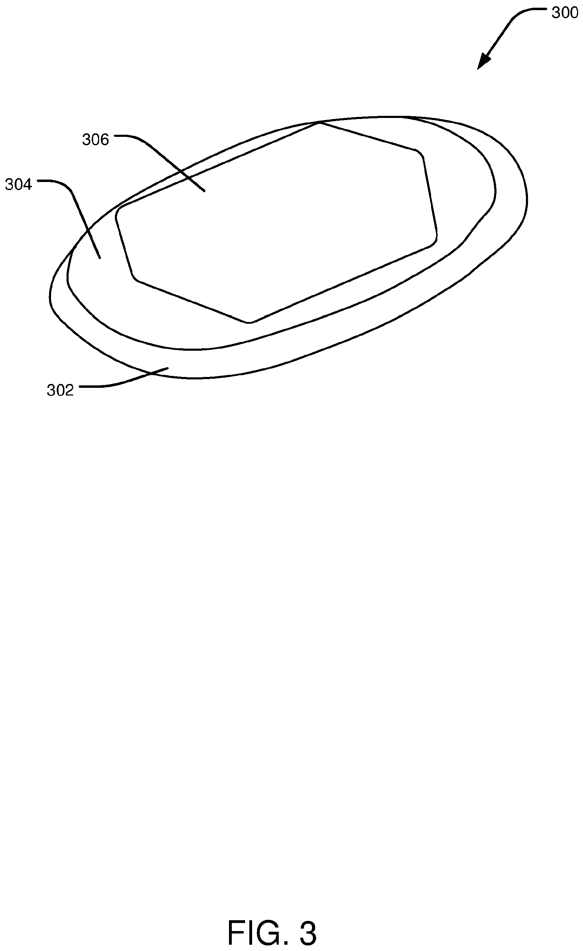

FIG. 3 illustrates a perspective view of a broadband radome structure 300 generally provided in accordance with the structure described in FIG. 2. That is, the broadband radome structure 300 may include a fairing 302 that is attachable to a platform such as a vehicle chassis, aircraft, ship (e.g., the deck or any part of the superstructure of the ship), vehicles, or other appropriate platform. The broadband radome structure 300 may also include an adapter plate 304 that is attached to the fairing 302.

A broadband radome 306 may be attached to the adapter plate 304 and generally disposed in the field of view of an antenna enclosed by the broadband radome 306. The broadband radome 306 may have a single structure configuration that supports both reception and transmission of RF energy to the antenna enclosed by the broadband radome 306. That is, the broadband radome 306 may have a uniform structure across the entirety of the radome 306 that is tuned or designed to provide acceptable RF performance for both transmit and receive functions of an antenna enclosed by the radome 306.

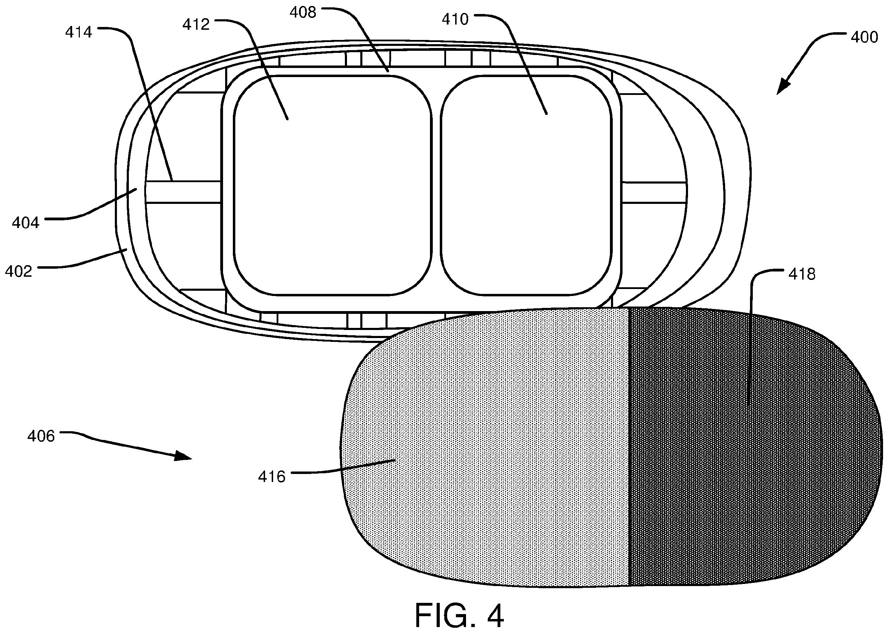

In contrast, FIG. 4 illustrates a narrowband radome structure 400 that may include specifically provided portions for different functions of an antenna 408 enclosed by a narrowband radome 406. The narrowband radome 406 is shown in an exploded configuration relative to an adapter plate 404 in FIG. 4. Like in the foregoing descriptions, the adapter plate 404 may be attached to a fairing 402 that may be engaged with a support surface such as a vehicle chassis or airframe. The adapter plate 404 may also include one or more struts 414 that extend between the adapter plate 404 to support the antenna 408.

The antenna 408 may include a receiver 410 and a transmitter 412 that may each include dedicated antenna portions. In this regard, the antenna 408 includes a transmit portion 416 and a receive portion 418. The transmit portion 416 may generally be disposed relative to the transmitter 412 of the antenna 408. The receive portion 418 may generally be disposed relative to the receiver 410 of the antenna 408. That is, RF energy originating from the transmitter 412 may pass through the transmit portion 416 whereas RF energy directed to the receiver 410 may pass through the receive portion 418.

In this regard, the transmit portion 416 and receive portion 418 may have different characteristics that are specifically provided for the nature of the RF energy that passes through the respective zones. For example, as will be described in greater detail below, different radome structures having different layers may be provided. As such, the transmit portion 416 and receive portion 418 may have different respective layer configurations. Alternatively, the layer structure of the transmit portion 416 and receive portion 418 may be the same configuration, but the nature of the layers may differ. For instance, the composition of a given layer may differ between the transmit portion 416 and the receive portion 418. Additionally or alternatively, the thicknesses of the individual layers comprising the radome wall sandwich may differ between the transmit portion 416 and receive portion 418. The transmit portion 416 and the receive portion 418 may be tailored to provide improved performance for the respective transmitter 412 and receiver 410 to which the portions correspond.

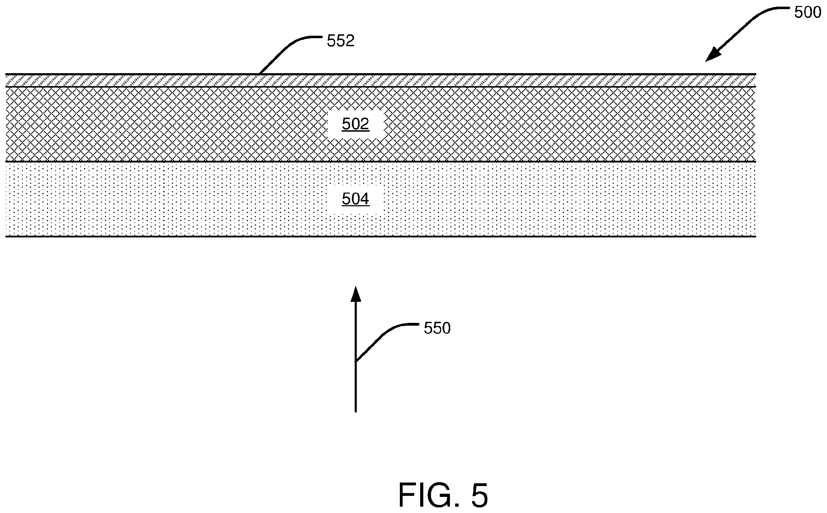

FIG. 5 illustrates an example of a radome structure 500. The radome structure 500 may include a structural layer 502. The structural layer 502 may include a fiber reinforced thermoplastic composite. In this regard, the structural layer 502 may include a fiber reinforcement and a thermoplastic resin. The structural layer 502 may have a thickness of not less than about 1.0 mm and not greater than about 15.0 mm. In another example, the structural layer 502 may include a thickness of not less than about 2.0 mm and not greater than about 10.0 mm. In another example, the structural layer 502 may include a thickness of not less than about 2.0 mm and not greater than about 5.0 mm. In some examples, the thickness of the structural layer 502 may not be uniform such that the structural layer 502 may be thicker in some areas than others.

The fiber reinforcement may include continuous or chopped fibers. Continuous fibers may be in any configuration including woven fibers, knitted fibers, braided fibers, uniaxial fibers, multiaxial fibers, or the like. The structural layer 502 may comprise a plurality of fiber plies that may be uniform or vary throughout the structural layer 502 as described in greater detail below. The fiber reinforcement may include any one or more of C-glass fibers, E-glass fibers, D-glass fibers, S-glass fibers, quartz fibers, HDPE fibers, carbon fibers, aramid fibers, natural fibers, or other fiber types.

In another example, the structural layer 502 may not include a fiber reinforcement such that the structural layer 502 may include a thermoplastic resin without any fiber reinforcement. That is, the structural layer 502 may comprise neat resin. As may be appreciated, providing a structural layer 502 without fiber reinforcement may improve RF performance, but degrade structural performance. As such, an example of a structural layer 502 that lacks fiber reinforcement may be suitable for applications with reduced structural performance requirements such as land-based applications including land-based vehicles or stationary antennas. Such an example may also be used in maritime contexts in which structural requirements allow.

The thermoplastic resin may include any one or more of polyetherimide (PEI), polyphenylene sulfide (PPS), polycarbonate (PC), polyether ether ketone (PEEK), polyetherketoneketone (PEKK), polyaryletherketone (PAEK), polyethylene (PE), polypropylene (PP), polyethylene terephthalate (PET), acrylonitrile butadiene styrene (ABS), polyamide (PA), polytetrafluoroethylene (PTFE), or other appropriate resin. As noted above, in an example, the resin content of the structural layer 502 may be not fewer than 25 weight percent of the fiber reinforced thermoplastic composite and not greater than 60 weight percent of the fiber reinforced thermoplastic composite. This may provide improved RF performance of the fiber reinforced composite as a balance to reduced structural performance. In another example, the resin content of the structural layer 502 may be not fewer than 30 weight percent of the fiber reinforced thermoplastic composite and not greater than 50 weight percent of the fiber reinforced thermoplastic composite. In one example, the resin content of the structural layer 502 may be not fewer than 38 weight percent of the fiber reinforced thermoplastic composite and not greater than 42 weight percent of the fiber reinforced thermoplastic composite, with one particular example having a resin content of about 40 weight percent of the fiber reinforced thermoplastic composite.

The structural layer 502 may have a dielectric constant value, which in the case of a composite material comprising different materials may be an effective dielectric constant value that the composite as a whole appears to present to the incident electromagnetic wave. Reference herein to a material's dielectric constant value may be a relative dielectric constant value that is relative to a dielectric constant of free space, i.e., air or vacuum. In contrast, an absolute dielectric constant of a material may be the relative dielectric constant multiplied by the absolute dielectric constant of air/vacuum. The dielectric constant value of the structural layer 502 may be based on a number of characteristics including the relative percentage of fiber reinforcement relative to resin content, the type of fiber reinforcement, the type of resin, layer thickness, or other considerations. For example, the relative dielectric constant value of the structural layer 502 may be not less than about 2.0 and not be greater than about 5.0.

The radome structure 500 may also include an RF matching layer 504. The RF matching layer 504 may have a dielectric constant value that is less than the dielectric constant of the structural layer 502. The RF matching layer 504 may be disposed on at least one side of the structural layer 502. For example, in FIG. 5, the RF matching layer 504 may be disposed nearer a RF antenna incidence 550 than the structural layer 502 (i.e., the RF matching layer 504 may be disposed on an inner surface of the structural layer 502). In turn, RF energy originating from an antenna from the direction represented by the RF antenna incidence 550 may encounter the RF matching layer 504 prior to the structural layer 502. While not shown, an RF matching layer may additionally or alternatively be disposed on an outer side of the structural layer 502 opposite that of the RF antenna incidence 550 (e.g., on a side of the structural layer 502 away from the antenna or other RF equipment enclosed by the radome structure 500). In some examples, the relative dielectric constant of the RF matching layer 504 may be not less than about 1.0 and not greater than about 4.5, where the value is nevertheless lower than the dielectric constant value of the structural layer 502 to provide the RF matching benefits described above. The thickness of the RF matching layer 504 may not be greater than about 10.0 mm. In another example, the thickness of the RF matching layer 504 may not be greater than about 5.0 mm. In some examples, the thickness of the RF matching layer 504 may not be uniform such that the RF matching layer 504 may be thicker in some areas than others.

In addition, the radome structure 500 may include a protective layer 552. The protective layer 552 may be disposed on an outer surface of the radome structure 500 opposite the RF antenna incidence 550. In this regard, the protective layer 552 may be provided at an air interface of the radome structure 500 such that the protective layer 552 includes an airflow surface defining an outer surface of the radome structure 500. The protective layer 552 may provide protection from environmental conditions including UV protection or the like. The protective layer 552 may additionally or alternatively be hydrophobic . Use of a hydrophobic protective layer 552 may reduce or prevent standing water from accumulating on the radome structure 500. Such a layer of standing water on the outer surface may detrimentally impact RF transmission. Further still, the protective layer 552 may include pigmentation to provide protection to the radome structure 500 or provide ornamentation to the radome structure 500. As shown, the protective layer 552 may be applied directly to the structural layer 502. For example, the protective layer 552 may comprise a paint or primer that is applied to the structural layer 502. However, in other examples described more below, a protective layer may alternatively be applied to an RF matching layer disposed on a structural layer on a side opposite the RF antenna incidence or away from the side of the structural layer facing the RF equipment enclosed by the radome structure. Further still, the protective layer 552 may be included in a sheet stock material as a layer that is thermoformed along with the structural layer 502 and RF matching layer 504 during a manufacturing process.

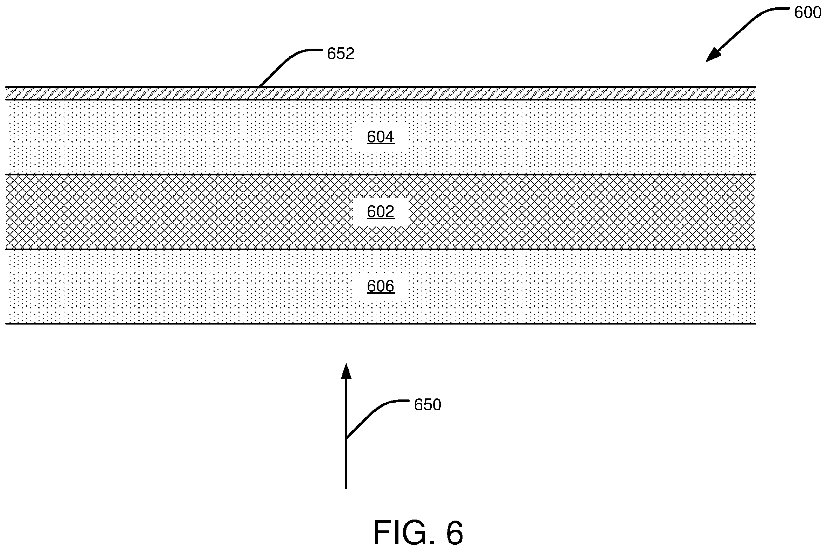

FIG. 6 depicts another example of a radome structure 600. The radome structure 600 may include a structural layer 602. The structural layer 602 may be provided according to any of the foregoing details described in relation to the structural layer 502. The radome structure 600 may include a first RF matching layer 604 disposed on a side of the structural layer 602 opposite an RF antenna incidence 650. In addition, the radome structure 600 may include a second RF matching layer 606. The second RF matching layer 606 is disposed on a side of the structural layer 602 nearer the RF antenna incidence 650 (e.g., nearer an antenna or other RF equipment enclosed by the radome structure 600). The first RF matching layer 604 and second RF matching layer 606 may be provided according to any of the foregoing details regarding the RF matching layer 504. Also, the radome structure 600 may include a protective layer 652 that may comprise any of the details described above in relation to the protective layer 552.

In the radome structure 600, the first RF matching layer 604 and the second RF matching layer 606 may each have a dielectric constant value that is less than a dielectric constant value of the structural layer 602. The dielectric constant value of the first RF matching layer 604 and the second RF matching layer 606 may be the same or may be different.

In one example, the structural layer 602 may be a fiber reinforced composite material and the first RF matching layer 604 and second RF matching layer 606 may include a syntactic material such as syntactic foam or other specifically provided RF matching material. The syntactic material may be a thermoplastic material. For example, the syntactic material may comprise the same thermoplastic material that is provided in the structural layer 602. Alternatively, a different thermoplastic material may be provided for the syntactic material relative to the thermoplastic material of the structural layer 602.

In another approach, the first RF matching layer 604 and the second RF matching layer 606 may include neat resin layers such that the first RF matching layer 604 and second RF matching layer 606 may comprise the same thermoplastic resin used in the structural layer 602 in the absence of any fiber reinforcement. As may be appreciated, the neat resin may provide a dielectric constant value less than a corresponding dielectric constant value of the structural layer 602 that may include fiber reinforcement. As such, the neat resin may act as the first RF matching layer 604 and second RF matching layer 606 to provide a dielectric constant gradient to provide improved RF performance as described above. Furthermore, use of a first RF matching layer 604 and second RF matching layer 606 comprising neat resin may be further utilized in conjunction with additional layers of RF matching material on one or both sides of the radome structure 600 to provide further RF matching benefits. In examples, the neat resin layers comprising the first RF matching layer 604 and second RF matching layer 606 may have a thickness of less than about 3.0 mm.

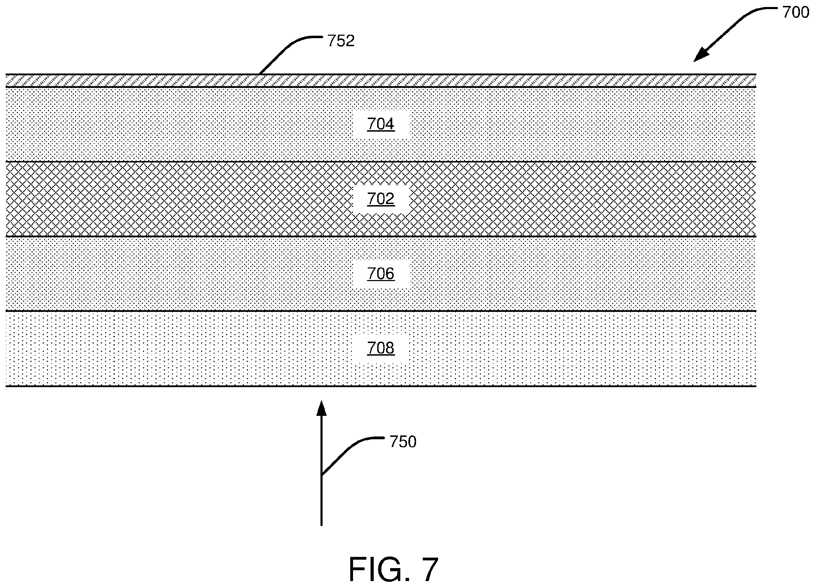

FIG. 7 depicts still another example radome structure 700. The radome structure 700 may include an asymmetric layer stack having more RF matching layers on a given side of a structural layer 702. The structural layer 702 may be provided according to any of the foregoing details described in relation to the structural layer 502. The radome structure 700 may include a first RF matching layer 704 disposed on a side of the structural layer 702 opposite an RF antenna incidence 750. In addition, the radome structure 700 may include a second RF matching layer 706. The second RF matching layer 706 is disposed on a side of the structural layer 702 nearer the RF antenna incidence 750 (e.g., nearer an antenna or other RF equipment enclosed by the radome structure 700). The radome structure 700 may also include a third RF matching layer 708 that is disposed on the second RF matching layer 706. That is, the third RF matching layer 708 may be nearer the RF antenna incidence 750 than the second RF matching layer 706. The first RF matching layer 704, the second RF matching layer 706, and the third RF matching layer 708 may be provided according to any of the foregoing details regarding the RF matching layer 504, with the third RF matching layer708 having a lower dielectric constant value than the second RF matching layer 706. Also, the radome structure 700 may include a protective layer 752 that may comprise any of the details described above in relation to the protective layer 552.

In the radome structure 700, the first RF matching layer 704 and the second RF matching layer 706 may each have a dielectric constant value that is less than a dielectric constant value of the structural layer 702. The dielectric constant value of the first RF matching layer 704 and the second RF matching layer 706 may be the same or may be different. Furthermore, the third RF matching layer 708 may have a dielectric constant that is less than the second RF matching layer 706.

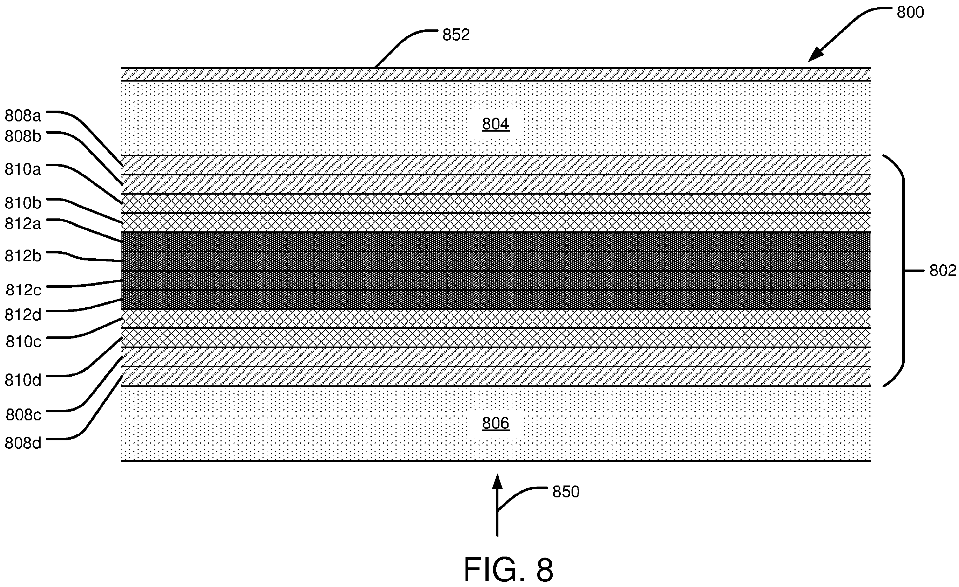

FIG. 8 illustrates an example of a radome structure 800 in which a structural layer 802 is configured to provide improved RF performance through multiple plies of the structural layer 802. The radome structure 800 generally includes a structural layer 802 having a first RF matching layer 804 on a first side thereof and a second RF matching layer 806 on a second side thereof. In this regard, the first RF matching layer 804 and second RF matching layer 806 may be provided both on side of the structural layer 802 nearer the antenna generating RF antenna incidence 850 and a side of the structural layer 802 further from the antenna generating RF antenna incidence 850. In another example, the structural layer 802 is provided without the first RF matching layer 804 or second RF matching layer 806. The radome structure 800 may also include a protective layer 852 on the outermost side of the radome structure 800. The protective layer 852 may be provided according to any of the details of the protective layer 552 described above.

As noted above, the structural layer 802 may be configured to provide a plurality of plies having different dielectric constants to improve RF performance. Generally, in the structural layer 802, plies that are nearer the center of the structural layer 802 (e.g., central plies) may have a higher dielectric constant than plies nearer the outer and inner surfaces of the structural layer 802 (e.g., peripheral plies). In this regard, reference may be made to central plies and peripheral plies, with central plies referring to plies nearer the center of the structural layer 802 and peripheral plies referring to plies nearer the inner or outer boundary of the structural layer 802.

A low dielectric constant ply 808a and low dielectric constant ply 808b may be provided near the outer boundary of the structural layer 802 near the first RF matching layer 804 while a low dielectric constant ply 808c and low dielectric constant ply 808d may be provided near the inner boundary of the structural layer 802 near the second RF matching layer 806. A medium dielectric constant ply 810a and medium dielectric constant ply 810b may be disposed more centrally within the structural layer 802 relative to the low dielectric constant plies 808a-b. Similarly, a medium dielectric constant ply 810c and medium dielectric constant ply 810d may be disposed more centrally within the structural layer 802 relative to the low dielectric constant plies 808c-d. Finally, a high dielectric constant ply 812a, a high dielectric constant ply 812b, a high dielectric constant ply 812c, and a high dielectric constant ply 812d may be provided centrally within the structural layer 802.

The low dielectric constant plies 808a-d may have the lowest dielectric constant of the various plies. The medium dielectric constant plies 810a-d may have a higher dielectric constant than the low dielectric constant plies 808a-d, but a lower dielectric constant than the high dielectric constant plies 812a-d. The high dielectric constant plies 812a-d may have the highest dielectric constant value of the various plies. In this regard, whether antenna generating RF antenna incidence 850 passes in the direction shown in FIG. 8 or RF energy passes in an opposite directing, the structural layer 802 may provide a dielectric constant gradient through the structural layer 802 that provides incremental increases moving towards to the high dielectric constant plies 812a-d and incremental decrease moving away from the high dielectric constant plies 812a-d. In the example shown, the first RF matching layer 804 and second RF matching layer 806 may have a dielectric constant lower still than the low dielectric constant plies 808a-d, further improving RF performance of the radome structure 800.

The various values of the dielectric constant provided by the low dielectric constant plies 808a-d, medium dielectric constant plies 810a-d, and high dielectric constant plies 812a-d may be achieved through control of any one or more properties of the various plies. For example, the type of fiber reinforcement utilized, the form of the fiber reinforcement (e.g., uniaxial or triaxial), the type of resin used, the relative fiber to resin weight content of a ply, the thickness of the ply or other characteristics may be controlled to achieve the gradients of dielectric constants described above in the structural layer 802.

Also, while four of each of the various plies are shown in FIG. 8, it may be appreciated that fewer or additional plies may be provided without limitation. Furthermore, the number of low dielectric constant plies, medium dielectric constant plies, and high dielectric constant plies need not be the same. Furthermore, additional or fewer ply types of different dielectric constant may be provided than shown in FIG. 8. In any regard, the values of the dielectric constants of the plies may gradually increase and/or decrease through the thickness of the structural layer 802 to provide RF performance benefits as noted above.

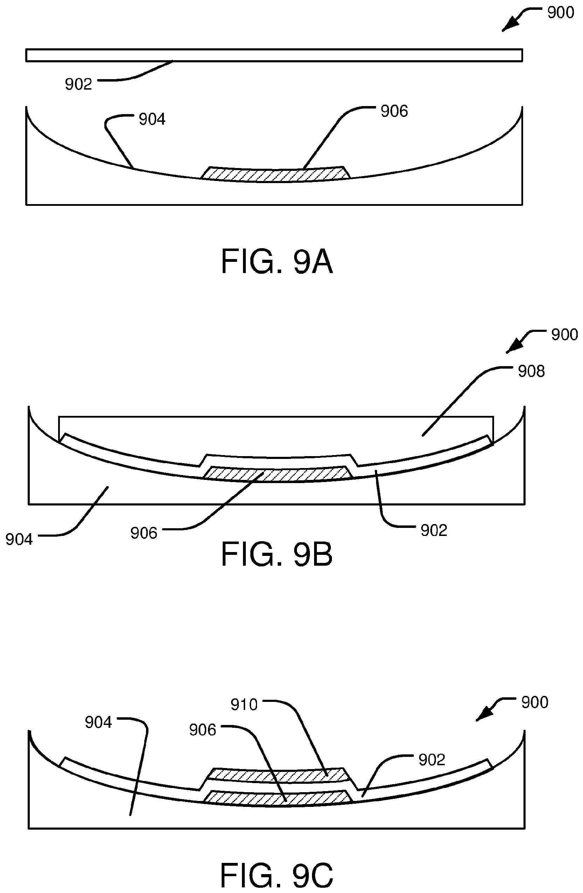

FIGS. 9A-9C illustrates examples of processing steps for a thermoforming process using a thermoforming device 900 that may be used to form a thermoplastic sheet 902 into a desired radome shape. In FIG. 9A, the thermoplastic sheet 902 may be introduced relative to a female mold 904. As shown, a syntactic 906 may be present relative to the female mold 904 such that the syntactic 906 is positioned relative to the female mold 904 during the positioning of the thermoplastic sheet 902 in the thermoforming device 900. Alternatively, in place of the syntactic 906 a corresponding mold filler may be provided that shapes the thermoplastic sheet 902 to later accommodate a syntactic 906 as shown.

As described above, the thermoplastic sheet 902 may comprise a sheet stock material. In this regard, the thermoplastic sheet 902 may include any of the structures described above in FIGS. 5-8. This may include providing RF matching layers in lieu of the syntactic 906 such that all layers of a radome structure may be provided by the sheet stock material and collectively formed through thermoforming using the process shown in FIGS. 9A-9C.

While referred to as a sheet stock material, it is simply meant to indicate that the thermoplastic sheet 902 is provided as a standardized sheet size. However, the configuration and composition of the thermoplastic sheet 902 may be custom manufactured for the specific radome to be created. As different thermoplastic sheets 902 may easily be formable in the thermoforming device 900, any desired composition of thermoplastic sheet 902 may be utilized (e.g., to provide specific structural and/or RF performance for a produced radome). Thus, reference to a sheet stock material may include fully consolidated laminates such that all layers of the radome structure are provided in the laminate sheet and formable in the thermoforming process. Thus, characteristics regarding the radome structure may be provided in the laminate sheet such as ply orientation, resin contents, layer thicknesses, or the like.

In FIG. 9B, the thermoplastic sheet 902 may be heated to allow for thermoforming of the thermoplastic sheet 902. In the depicted example, a male mold 908 may be used to compress the thermoplastic sheet 902 that is captured between the male mold 908 and the female mold 904. In another approach, either of the female mold 904 or male mold 908 may include vacuum channels such that vacuum assisted thermoforming may be used in which a lower pressure between the thermoplastic sheet 902 and the mold may draw the thermoplastic sheet 902 into engagement with the mold. While shown as a one-step process in FIG. 9B, it may be appreciated that the thermoplastic sheet 902 may undergo a plurality of processing steps in which the thermoplastic sheet 902 is thermoformed in stages. Furthermore, while not shown, the thermoplastic sheet 902 may be reworked (e.g., in the event of an anomaly in thermoforming) as the thermoplastic sheet 902 may be reheated and reformed. Accordingly, scrap may be reduced as potentially defective thermoplastic radome structures may be reworked upon reheating the thermoplastic sheet 902.

In FIG. 9C, the thermoplastic sheet 902 may be molded into shape relative to the female mold 904. Additionally, a second syntactic 910 may be disposed relative to the thermoplastic sheet 902 to form a radome structure according to the previously described examples. The thermoplastic sheet 902 to which the syntactic 906 and/or second syntactic 910 is attached may be removed from the female mold 904. As may be appreciated, the syntactic 906 and second syntactic 910 may be applied using an adhesive. Alternatively, the syntactic 906 and second syntactic 910 may be adhered to the thermoplastic sheet 902 by the thermoforming process as the thermoplastic sheet 902 may exhibit adhesion when heated. Further still, while shown as discrete portions in FIGS. 9A-9C, it may be appreciated that the RF matching layers may be provided in the thermoplastic sheet 902 such that the entirety of the thermoplastic sheet 902 is molded including structural layers and RF matching layers in any configuration described above.

As may be appreciated, as compared to thermoset materials, the thermoplastic sheet 902 may provide significant advantages regarding the complexity and cost of manufacturing. Rather than hand-laid sheets, the thermoplastic sheet 902 may be processed as a unit by machinery to heat and form the thermoplastic sheet 902. In turn, as hand-layup and autoclaving may be eliminated from the manufacturing process, the thermoforming process shown in FIGS. 9A-9C may require minutes of processing rather than potentially hours in the case of thermoset materials. Furthermore, the storage requirements for the thermoplastic sheet 902 may be less complex than those of thermoset materials.

Also, during the thermoforming process depicted in FIGS. 9A-9C, other features of a radome may be set into place. For example, mounting hardware such as mounting pins and other alignment fittings or screw bosses that are often made from a metallic material may be directly thermoformed into place relative to the thermoplastic sheet 902, as opposed to inserted and affixed after the radome has been produced. As the thermoplastic sheet 902 may flow about any such introduced hardware, the hardware may be embedded into the thermoplastic sheet 902 during the thermoforming process.

While this specification contains many specific implementation details, these should not be construed as limitations on the scope of any technologies or of what may be claimed, but rather as descriptions of features specific to particular implementations of the particular described technology. Certain features that are described in this specification in the context of separate implementations can also be implemented in combination in a single implementation. Conversely, various features that are described in the context of a single implementation can also be implemented in multiple implementations separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

A number of implementations of the described technology have been described. Nevertheless, it will be understood that various modifications can be made without departing from the scope of the recited claims.

## Claims

1. A radome (206, 100), comprising:
a structural layer (802, 702, 602, 502) comprising a fiber reinforced thermoplastic composite including a fiber reinforcement and a thermoplastic resin, wherein a resin content of the thermoplastic resin of the fiber reinforced thermoplastic composite is not fewer than 25 percent by weight and not more than about 60 percent by weight; and
an RF matching layer (504) disposed on at least one side of the structural layer (802, 702, 602, 502), the RF matching layer (504) comprising a first dielectric constant value that is lower than that a dielectric constant value of the structural layer (802, 702, 602, 502).

2. The radome (206, 100) of claim 1, wherein the fiber reinforced thermoplastic composite comprises a laminated sheet stock material formable into a shape for the radome (206, 100) through a thermoforming process.

3. The radome (206, 100) of any one of claims 1 or 2, further comprising:
a second RF matching layer (504, 806, 706, 606) disposed on an opposite side of the structural layer (802, 702, 602, 502) as the RF matching layer (504), the second RF matching layer (504, 806, 706, 606) having a second dielectric constant value that is lower than that of the structural layer (802, 702, 602, 502), or,
further comprising:
a second RF matching layer (504, 806, 706, 606) disposed on a side of the RF matching layer (504) opposite the structural layer (802, 702, 602, 502), the second RF matching layer (504, 806, 706, 606) comprising a second dielectric constant value that is lower than the first dielectric constant value of the RF matching layer (504).

4. The radome (206, 100) of any one of claims 1 or 3, wherein the RF matching layer (504) comprises a neat resin layer comprising the thermoplastic resin in the absence of the fiber reinforcement,
or wherein the RF matching layer (504) comprises a thermoplastic syntactic (906) layer.

5. The radome (206, 100) of any one of claims 1-4, wherein the fiber reinforcement comprises a plurality of plies, wherein one or more peripheral plies comprises a lower dielectric constant value than one or more central plies,
and optionally wherein the one or more peripheral plies comprise a higher resin content than the one or more central plies,
or optionally, wherein the one or more peripheral plies comprise a different fiber reinforcement than the one or more central plies,
or optionally, wherein the one or more peripheral plies comprise a different fiber reinforcement material than the one or more central plies,
or optionally, wherein the one or more peripheral plies comprise a different fiber reinforcement configuration than the one or more central plies.

6. The radome (206, 100) of any preceding claim, wherein the fiber reinforcement comprises continuous fibers,
and/or, wherein the fiber reinforcement comprises chopped fibers, and/or, wherein the fiber reinforcement comprises at least one of E-glass, D-glass, S-glass, C-glass, quartz, carbon, aramid fiber, natural fibers, or HDPE, and/or, wherein the thermoplastic resin comprises at least one of polyetherimide (PEI), polyphenylene sulfide (PPS), polycarbonate (PC), polyether ether ketone (PEEK), polyetherketoneketone (PEKK), polyaryletherketone (PAEK), polyethylene (PE), polypropylene (PP), polyethylene terephthalate (PET), acrylonitrile butadiene styrene (ABS), polyamide (PA), or polytetrafluoroethylene (PTFE), and/or, wherein the dielectric constant value of the structural layer (802, 702, 602, 502) is a relative dielectric constant value of not less than about 2.0 and not greater than about 5.0, and/or, wherein the first dielectric constant value of the RF matching layer (504) is a first relative dielectric constant value of not less than 1.0 and not greater than about 4.5, and/or, wherein the RF matching layer (504) comprise a thickness not greater than about 5.0 mm, and/or, wherein the structural layer (802, 702, 602, 502) comprises a thickness that is not less than about 1.0 mm and not greater than about 5.0 mm.

7. The radome (206) (100) of claim 1, further comprising:
a protective layer (852, 752, 652, 552) disposed on an outermost surface of the radome (206, 100), the outermost surface comprising an air interface surface, and , wherein the protective layer (852, 752, 652, 552) is applied to the structural layer (802, 702, 602, 502)

8. The radome (206) (100) of any one of claims 1-6, further comprising:
a protective layer (852, 752, 652, 552) disposed on an outermost surface of the radome (206, 100), the outermost surface comprising an air interface surface, and optionally, wherein the protective layer (852, 752, 652, 552) is applied to the RF matching layer (504).

9. A method for producing a radome (206, 100), comprising:
disposing a fiber reinforced thermoplastic composite relative to a mold in a thermoforming device (900), the fiber reinforced thermoplastic composite comprising:
a structural layer (802, 702, 602, 502) comprising a fiber reinforcement and a thermoplastic resin, wherein a resin content of the thermoplastic resin of the fiber reinforced thermoplastic composite is not fewer than 25 percent by weight and not more than about 60 percent by weight, and
an RF matching layer (504) disposed on at least one side of the structural layer (802, 702, 602, 502), the RF matching layer (504) comprising a first dielectric constant value that is lower than that a dielectric constant value of the structural layer (802, 702, 602, 502);
heating the fiber reinforced thermoplastic composite; and
thermoforming the fiber reinforced thermoplastic composite into a radome (206, 100) shape defined by the mold.

10. The method of claim 9, wherein the thermoforming comprises capturing the fiber reinforced thermoplastic composite between a male mold (908) portion and a female mold (904) portion.

11. The method of any one of claims 9 or 10,
wherein the thermoforming comprises vacuum assisted thermoforming relative to the mold.

12. The method of claim 11, further comprising:
positioning mounting hardware relative to the fiber reinforced thermoplastic composite such that the thermoforming includes embedding the mounting hardware into the fiber reinforce thermoplastic composite.

13. The method of any one of claims 9 to 12, wherein the fiber reinforced thermoplastic composite comprises a laminated sheet stock material.

## Patentansprüche

1. Radom (206, 100), umfassend:
eine Strukturschicht (802, 702, 602, 502), die einen faserverstärkten thermoplastischen Verbundwerkstoff umfasst, der eine Faserverstärkung und ein thermoplastisches Harz umfasst, wobei ein Harzgehalt des thermoplastischen Harzes des faserverstärkten thermoplastischen Verbundwerkstoffs nicht weniger als 25 Gewichtsprozent und nicht mehr als etwa 60 Gewichtsprozent beträgt; und
eine HF-Angleichungsschicht (504), die auf wenigstens einer Seite der Strukturschicht (802, 702, 602, 502) angeordnet ist, wobei die HF-Angleichungsschicht (504) einen ersten Dielektrizitätskonstantenwert umfasst, der niedriger als derjenige eines Dielektrizitätskonstantenwerts der Strukturschicht (802, 702, 602, 502) ist.

2. Radom (206, 100) nach Anspruch 1, wobei der faserverstärkte thermoplastische Verbundwerkstoff ein als Verbundfolie vorliegendes Ausgangsmaterial umfasst, das mittels eines Thermoformverfahrens in eine Form für das Radom (206, 100) formbar ist.

3. Radom (206, 100) nach einem der Ansprüche 1 oder 2, ferner umfassend:
eine zweite HF-Angleichungsschicht (504, 806, 706, 606), die auf einer gegenüberliegenden Seite der Strukturschicht (802, 702, 602, 502) - bezogen auf die HF-Angleichungsschicht (504) - angeordnet ist, wobei die zweite HF-Angleichungsschicht (504, 806, 706, 606) einen zweiten Dielektrizitätskonstantenwert aufweist, der niedriger als derjenige der Strukturschicht (802, 702, 602, 502) ist, oder
ferner umfassend:
eine zweite HF-Angleichungsschicht (504, 806, 706, 606), die auf einer Seite der HF-Angleichungsschicht (504) gegenüber der Strukturschicht (802, 702, 602, 502) angeordnet ist, wobei die zweite HF-Angleichungsschicht (504, 806, 706, 606) einen zweiten Dielektrizitätskonstantenwert umfasst, der niedriger als der erste Dielektrizitätskonstantenwert der HF-Angleichungsschicht (504) ist.

4. Radom (206, 100) nach einem der Ansprüche 1 oder 3, wobei die HF-Angleichungsschicht (504) eine reine Harzschicht umfasst, die das thermoplastische Harz in Abwesenheit der Faserverstärkung umfasst,
oder wobei die HF-Angleichungsschicht (504) eine Schicht aus einem thermoplastischen syndiotaktischen Polymer (906) umfasst.

5. Radom (206, 100) nach einem der Ansprüche 1-4, wobei die Faserverstärkung eine Mehrzahl von Lagen umfasst, wobei eine oder mehrere periphere Lagen einen niedrigeren Dielektrizitätskonstantenwert als eine oder mehrere mittige Lagen umfassen
und wobei optional die eine oder mehreren peripheren Lagen einen höheren Harzgehalt als die eine oder mehreren mittigen Lagen umfassen
oder wobei optional die eine oder mehreren peripheren Lagen eine andere Faserverstärkung als die eine oder mehreren mittigen Lagen umfassen
oder wobei optional die eine oder mehreren peripheren Lagen ein anderes Faserverstärkungsmaterial als die eine oder mehreren mittigen Lagen umfassen
oder wobei optional die eine oder mehreren peripheren Lagen eine andere Faserverstärkungsausgestaltung als die eine oder mehreren mittigen Lagen umfassen.

6. Radom (206, 100) nach einem vorangehenden Anspruch, wobei die Faserverstärkung Endlosfasern umfasst
und/oder wobei die Faserverstärkung zerkleinerte Fasern umfasst und/oder wobei die Faserverstärkung wenigstens eines aus E-Glas, D-Glas, S-Glas, C-Glas, Quarz, Kohlenstoff, Aramidfaser, natürlichen Fasern oder HDPE umfasst und/oder wobei das thermoplastische Harz wenigstens eines aus Polyetherimid (PEI), Polyphenylensulfid (PPS), Polycarbonat (PC), Polyetheretherketon (PEEK), Polyetherketonketon (PEKK), Polyaryletherketon (PAEK), Polyethylen (PE), Polypropylen (PP), Polyethylenterephthalat (PET), Acrylnitril-Butadien-Styrol (ABS), Polyamid (PA) oder Polytetrafluorethylen (PTFE) umfasst und/oder wobei der Dielektrizitätskonstantenwert der Strukturschicht (802, 702, 602, 502) ein relativer Dielektrizitätskonstantenwert von nicht kleiner als etwa 2,0 und nicht größer als etwa 5,0 ist und/oder wobei der erste Dielektrizitätskonstantenwert der HF-Angleichungsschicht (504) ein erster relativer Dielektrizitätskonstantenwert von nicht kleiner als 1,0 und nicht größer als etwa 4,5 ist und/oder wobei die HF-Angleichungsschicht (504) eine Dicke umfasst, die nicht größer als etwa 5,0 mm ist, und/oder wobei die Strukturschicht (802, 702, 602, 502) eine Dicke umfasst, die nicht kleiner als etwa 1,0 mm und nicht größer als etwa 5,0 mm ist.

7. Radom (206) (100) nach Anspruch 1, ferner umfassend: eine Schutzschicht (852, 752, 652, 552), die auf einer äußersten Oberfläche des Radoms (206, 100) angeordnet ist, wobei die äußerste Oberfläche eine Luftgrenzflächenoberfläche umfasst und wobei die Schutzschicht (852, 752, 652, 552) auf die Strukturschicht (802, 702, 602, 502) aufgebracht ist.

8. Radom (206) (100) nach einem der Ansprüche 1-6, ferner umfassend:
eine Schutzschicht (852, 752, 652, 552), die auf einer äußersten Oberfläche des Radoms (206, 100) angeordnet ist, wobei die äußerste Oberfläche eine Luftgrenzflächenoberfläche umfasst und wobei optional die Schutzschicht (852, 752, 652, 552) auf die HF-Angleichungsschicht (504) aufgebracht ist.

9. Verfahren zur Herstellung eines Radoms (206, 100), umfassend:
Anordnen eines faserverstärkten thermoplastischen Verbundwerkstoffs bezogen auf ein Formwerkzeug in einer Thermoformvorrichtung (900), wobei der faserverstärkte thermoplastische Verbundwerkstoff Folgendes umfasst:
eine Strukturschicht (802, 702, 602, 502), die eine Faserverstärkung und ein thermoplastisches Harz umfasst, wobei ein Harzgehalt des thermoplastischen Harzes des faserverstärkten thermoplastischen Verbundwerkstoffs nicht weniger als 25 Gewichtsprozent und nicht mehr als etwa 60 Gewichtsprozent beträgt, und
eine HF-Angleichungsschicht (504), die auf wenigstens einer Seite der Strukturschicht (802, 702, 602, 502) angeordnet ist, wobei die HF-Angleichungsschicht (504) einen ersten Dielektrizitätskonstantenwert umfasst, der niedriger als derjenige eines Dielektrizitätskonstantenwerts der Strukturschicht (802, 702, 602, 502) ist;
Erwärmen des faserverstärkten thermoplastischen Verbundwerkstoffs; und
Thermoformen des faserverstärkten thermoplastischen Verbundwerkstoffs in die Form eines Radoms (206, 100), die durch das Formwerkzeug definiert ist.

10. Verfahren nach Anspruch 9, wobei das Thermoformen das Einbringen des faserverstärkten thermoplastischen Verbundwerkstoffs zwischen einen aufgenommenen Formwerkzeugabschnitt (908) und einen aufnehmenden Formwerkzeugabschnitt (904) umfasst.

11. Verfahren nach einem der Ansprüche 9 oder 10, wobei das Thermoformen ein vakuumunterstütztes Thermoformen bezogen auf das Formwerkzeug umfasst.

12. Verfahren nach Anspruch 11, ferner umfassend:
Anordnen von Befestigungsbeschlägen bezogen auf den faserverstärkten thermoplastischen Verbundwerkstoff, derart dass das Thermoformen das Einbetten der Befestigungsbeschläge in den faserverstärkten thermoplastischen Verbundwerkstoff umfasst.

13. Verfahren nach einem der Ansprüche 9 bis 12, wobei der faserverstärkte thermoplastische Verbundwerkstoff ein als Verbundfolie vorliegendes Ausgangsmaterial umfasst.

## Revendications

1. Radôme (206, 100), comprenant :
une couche structurale (802, 702, 602, 502) comprenant un composite thermoplastique renforcé de fibres comportant un renfort fibreux et une résine thermoplastique, une teneur en résine de la résine thermoplastique du composite thermoplastique renforcé de fibres étant supérieure ou égale à 25 pour cent en poids et inférieure ou égale à environ 60 pour cent en poids ; et
une couche d'adaptation RF (504) disposée sur au moins un côté de la couche structurale (802, 702, 602, 502), la couche d'adaptation RF (504) présentant une première valeur de constante diélectrique qui est inférieure à une valeur de constante diélectrique de la couche structurale (802, 702, 602, 502).

2. Radôme (206, 100) de la revendication 1, dans lequel le composite thermoplastique renforcé de fibres comprend un matériau de base en feuille stratifiée pouvant être mis en forme pour le radôme (206, 100) par un procédé de thermoformage.

3. Radôme (206, 100) de l'une quelconque des revendications 1 et 2, comprenant en outre :
une deuxième couche d'adaptation RF (504, 806, 706, 606) disposée sur un côté opposé de la couche structurale (802, 702, 602, 502) par rapport à la couche d'adaptation RF (504), la deuxième couche d'adaptation RF (504, 806, 706, 606) présentant une deuxième valeur de constante diélectrique qui est inférieure à celle de la couche structurale (802, 702, 602, 502), ou
comprenant en outre :
une deuxième couche d'adaptation RF (504, 806, 706, 606) disposée sur un côté de la couche d'adaptation RF (504) à l'opposé de la couche structurale (802, 702, 602, 502), la deuxième couche d'adaptation RF (504, 806, 706, 606) présentant une deuxième valeur de constante diélectrique qui est inférieure à la première valeur de constante diélectrique de la couche d'adaptation RF (504).

4. Radôme (206, 100) de l'une quelconque des revendications 1 et 3, dans lequel la couche d'adaptation RF (504) comprend une couche de résine pure comprenant la résine thermoplastique en l'absence du renfort fibreux,
ou dans lequel la couche d'adaptation RF (504) comprend une couche thermoplastique syntactique (906).

5. Radôme (206, 100) de l'une quelconque des revendications 1 à 4, dans lequel le renfort fibreux comprend une pluralité de nappes, une ou plusieurs nappes périphériques présentant une valeur de constante diélectrique inférieure celle d'une ou plusieurs nappes centrales,
et éventuellement dans lequel la ou les nappes périphériques présentent une teneur en résine supérieure à celle de la ou des nappes centrales,
ou éventuellement dans lequel la ou les nappes périphériques comprennent un renfort fibreux différent de celui de la ou des nappes centrales,
ou éventuellement dans lequel la ou les nappes périphériques comprennent un matériau de renforcement fibreux différent de celui de la ou des nappes centrales, ou éventuellement dans lequel la ou les nappes périphériques présentent une configuration de renforcement fibreux différente de celle de la ou des nappes centrales.

6. Radôme (206, 100) de l'une quelconque des revendications précédentes, dans lequel le renfort fibreux comprend des fibres continues,
et/ou dans lequel le renfort fibreux comprend des fibres hachées, et/ou dans lequel le renfort fibreux comprend au moins un élément parmi le verre E, le verre D, le verre S, le verre C, le quartz, le carbone, la fibre d'aramide, les fibres naturelles et le HDPE, et/ou dans lequel la résine thermoplastique comprend au moins un élément parmi le polyétherimide (PEI), le polysulfure de phénylène (PPS), le polycarbonate (PC), la polyétheréthercétone (PEEK), la polyéthercétonecétone (PEKK), la polyaryléthercétone (PAEK), le polyéthylène (PE), le polypropylène (PP), le téréphtalate de polyéthylène (PET), l'acrylonitrile-butadiène-styrène (ABS), le polyamide (PA) et le polytétrafluoroéthylène (PTFE), et/ou dans lequel la valeur de constante diélectrique de la couche structurale (802, 702, 602, 502) est une valeur de constante diélectrique relative supérieure ou égale à environ 2,0 et inférieure ou égale à environ 5,0, et/ou dans lequel la première valeur de constante diélectrique de la couche d'adaptation RF (504) est une première valeur de constante diélectrique relative supérieure ou égale à 1,0 et inférieure ou égale à environ 4,5, et/ou dans lequel la couche d'adaptation RF (504) possède une épaisseur inférieure ou égale à environ 5,0 mm, et/ou dans lequel la couche structurale (802, 702, 602, 502) possède une épaisseur qui est supérieure ou égale à environ 1,0 mm et inférieure ou égale à environ 5,0 mm.

7. Radôme (206) (100) de la revendication 1, comprenant en outre :
une couche protectrice (852, 752, 652, 552) disposée sur une surface extérieure du radôme (206, 100), la surface extérieure comprenant une surface d'interface avec l'air, et la couche protectrice (852, 752, 652, 552) étant appliquée sur la couche structurale (802, 702, 602, 502).

8. Radôme (206) (100) de l'une quelconque des revendications 1 à 6, comprenant en outre :
une couche protectrice (852, 752, 652, 552) disposée sur une surface extérieure du radôme (206, 100), la surface extérieure comprenant une surface d'interface avec l'air, et la couche protectrice (852, 752, 652, 552) étant éventuellement appliquée à la couche d'adaptation RF (504).

9. Procédé de production d'un radôme (206, 100), comprenant :
la mise en place d'un composite thermoplastique renforcé de fibres par rapport à un moule dans un dispositif de thermoformage (900), le composite thermoplastique renforcé de fibres comprenant :
une couche structurale (802, 702, 602, 502) comprenant un renfort fibreux et une résine thermoplastique, une teneur en résine de la résine thermoplastique du composite thermoplastique renforcé de fibres étant supérieure ou égale à 25 pour cent en poids et inférieure ou égale à environ 60 pour cent en poids, et
une couche d'adaptation RF (504) disposée sur au moins un côté de la couche structurale (802, 702, 602, 502), la couche d'adaptation RF (504) présentant une première valeur de constante diélectrique qui est inférieure à une valeur de constante diélectrique de la couche structurale (802, 702, 602, 502) ;
le chauffage du composite thermoplastique renforcé de fibres ; et
le thermoformage du composite thermoplastique renforcé de fibres en forme de radôme (206, 100) définie par le moule.

10. Procédé de la revendication 9, dans lequel le thermoformage comprend la capture du composite thermoplastique renforcé de fibres entre une partie de moule mâle (908) et une partie de moule femelle (904).

11. Procédé de l'une quelconque des revendications 9 et 10, dans lequel le thermoformage comprend un thermoformage assisté par dépression par rapport au moule.

12. Procédé de la revendication 11, comprenant en outre :
le positionnement de matériel de montage par rapport au composite thermoplastique renforcé de fibres de telle sorte que le thermoformage comporte l'incorporation du matériel de montage à l'intérieur du composite thermoplastique renforcé de fibres.

13. Procédé de l'une quelconque des revendications 9 à 12, dans lequel le composite thermoplastique renforcé par des fibres comprend un matériau de base en feuille stratifiée.
